# EUROPÄISCHE PATENTSCHRIFT

(11) **EP 3 009 379 B1**
(45) Veröffentlichungstag und Bekanntmachung des Hinweises auf die Patenterteilung: **16.01.2019**
(21) Anmeldenummer: 15185990.7
(22) Anmeldetag: 21.09.2015
(51) Int. Cl.: B65G 45/12, B66B 29/06, B65G 45/26, B65G 45/10

(54) **FÖRDEREINRICHTUNG MIT EINEM FLÄCHIG AUSGEDEHNTEN FÖRDERORGAN**
CONVEYING DEVICE WITH AN EXTENDED CONVEYING BODY
DISPOSITIF DE CONVOYAGE DOTE D'UN ORGANE DE TRANSPORT A EXTENSION PLANE

(30) Priorität: 26.09.2014 DE 102014114018; 26.09.2014 DE 202014104665 U
(43) Veröffentlichungstag der Anmeldung: 20.04.2016
(73) Patentinhaber: WRH Walter Reist Holding AG, 8272 Ermatingen (CH)
(72) Erfinder: Moor, René, 8422 Pfungen (CH); Fischer, Michael, 8570 Weinfelden (CH)
(74) Vertreter: Frei Patent Attorneys

(56) Entgegenhaltungen:
- WO-A1-03/053823
- AU-A- 3 847 472
- CN-A- 103 086 139
- DE-A1- 2 840 803
- DE-A1- 19 746 348
- DE-T2-602004 009 477
- DE-U1- 8 407 606
- JP-A- H11 106 024
- US-A- 2 782 896

## Beschreibung

Die Erfindung bezieht sich auf das Gebiet der Fördertechnik und betrifft ein Werker-Mitfahrband nach dem Oberbegriff des Anspruchs 1.

Fördereinrichtungen mit einem umlaufenden, flächig ausgedehnten Förderorgan wie Förderband oder Mattenkette sind im Stand der Technik bekannt. Die Förderorgane werden in der Regel an einer oder zwei Umlenkstellen über eine Umlenkwelle angetrieben.
Zur Abstützung des Förderorgans im Bereich des Förderabschnittes zwischen den Umlenkstellen, in welchem das Fördergut dem Förderorgan aufliegt, wird das Förderorgan z. B. auf Gleitschienen gleitend geführt. Es sind auch Fördereinrichtungen bekannt, bei welchen das Förderorgan zwischen den Umlenkstellen rollend abgestützt wird.

Die genannten Fördereinrichtungen finden insbesondere als Werker-Mitfahrbänder Verwendung. Werker-Mitfahrbänder sind dazu ausgelegt, entlang einer Fertigungsstrasse bzw. am Fliessband arbeitende Personen zu tragen und wenigstens zeitweise oder andauernd in Fertigungsrichtung zu fördern, so dass die in der Fertigungsstrasse bzw. am Fliessband arbeitenden Personen mit den durch die Fertigungsstrasse bzw. auf dem Fliessband geförderten Fertigungsgüter mitbewegt werden. Werker-Mitfahrbänder zeichnen sich insbesondere durch eine geringe Bauhöhe aus.

So beschreibt die DE 10 2006 010 974 ein Werker-Mitfahrband mit einem Förderband sowie einem im Wesentlichen horizontalen Führungsrahmen mit zwei seitlichen, sich horizontal in Längsrichtung des Förderbandes erstreckenden Seitenwangen. An den Enden des Werker-Mitfahrbandes ist jeweils eine durch einen Antrieb antreibbare Umlenkrolle drehbar gelagert. Der Antrieb ist zwischen den beiden Seitenwangen angeordnet.

Beim Betrieb solcher Werker-Mitfahrbänder ist der Betreiber mit dem Problem konfrontiert, dass während der Fertigung Festkörper, wie Kleinteile, z. B. Schrauben, Muttern, Kabelbinder, Kabelabschnitte oder Klemmen, auf das Förderorgan herunterfallen und als Fremdkörper auf dem Förderorgan in Förderrichtung gefördert werden.

Die mitgeförderten Fremdkörper bergen die Gefahr, dass diese im vorderen Kopfendbereich in die Umlenkung eingezogen werden und in das Innere der Fördereinrichtung gelangen. Die Begriffe "vordere" und "hintere" stehen in diesem Zusammenhang in Bezug zur Förderrichtung.

Die eingezogenen Fremdkörper können so zum Verschleiss, zu Beschädigung oder gar zur Zerstörung von mechanischen Bauteilen, oder zu Geräuschentwicklung führen. Im schlimmsten Fall wird der Betrieb der Fördereinrichtung derart beeinträchtigt, dass diese abgestellt und die Störung behoben bzw. die Fördereinrichtung repariert oder ausgewechselt werden muss.
Da der Ausfall eines Werker-Mitfahrbandes den Betrieb einer Fertigungslinie behindern kann, müssen defekte Werker-Mitfahrbänder innert sehr kurzer Zeit wieder betriebsbereit sein. In Fachkreisen spricht man von einer maximalen Ausfallzeit von 10 Minuten.
Es ist daher wichtig darauf zu achten, dass bereits die Ursachen, welche zum Ausfall eines Werker-Mitfahrbandes führen können, nach Möglichkeit beseitigt werden.

Die Veröffentlichung US 2 782 896 A offenbart die technischen Merkmale des Oberbegriffs des Anspruchs 1 und beschreibt einen Fahrsteig mit einem Abstiegbereich am Ende des Fahrsteigs, umfassend eine an das Förderband anschliessende, feststehende Trittfläche sowie einen flexiblen Streifen zum Verschliessen des Spaltes zwischen dem in die Umlenkung geführten Förderband und der Trittfläche.

Es ist deshalb Aufgabe der vorliegenden Erfindung, ein Werker-Mitfahrband der eingangs genannten Art vorzuschlagen, welche Mittel enthält, die verhindern, dass auf das Förderorgan fallende und mit diesem mitgeförderte Fremdkörper in die Umlenkung eingezogen werden und in das Innere der Fördereinrichtung gelangen.
Eine weitere Aufgabe besteht ferner darin, zu verhindern, dass die auf dem Förderorgan mitgeförderten Fremdkörper am Ende der Förderstrecke vom Förderorgan auf den Boden fallen und sich unkontrolliert auf dem Boden verteilen und diesen verschmutzen und gegebenenfalls eine Gefahr für die Sicherheit der Mitarbeiter darstellen.
Die Erfindung wird durch die Merkmale der unabhängigen Ansprüche 1 und 12 gelöst. Weitere Ausführungsformen und Weiterbildungen der Erfindung gehen aus den abhängigen Patentansprüchen, der Beschreibung und den Zeichnungen hervor.

Es ist in einem in Förderrichtung (F) vorderen Kopfendbereich, in welchem das Förderorgan vom Förderabschnitt in den Rückführabschnitt umgelenkt wird, eine Abstreifvorrichtung zum Abstreifen von auf der Förderfläche des Förderorgans mitgeführten Fremdkörpern angeordnet.

Die Abstreifvorrichtung enthält eine Abstreifeinheit mit einer quer zur Förderrichtung verlaufenden Übernahmeleiste sowie eine an der Abstreifeinheit gelagerte Abstreifleiste, welche einen Halteabschnitt aufweist, über welchen die Abstreifleiste an der Abstreifeinheit befestigt. ist.

Ferner bildet die Abstreifleiste eine an den Halteabschnitt zum Förderorgan hin anschliessende und der Übernahmeleiste vorstehende, flexible Abstreiflippe aus.

Die Abstreifleiste ist insbesondere im Wesentlichen horizontal gelagert. "Im Wesentlichen horizontal" bedeutet, dass die Lage der Abstreifleiste oder Teilen davon 10° (Winkelgrad) oder weniger, insbesondere 5° oder weniger von einer Horizontalen abweicht.

Im Förderabschnitt werden Objekte bzw. Subjekte auf der Förderfläche in Förderrichtung gefördert. Der Förderabschnitt entspricht folglich jenem Abschnitt des Förderorgans, welcher die Förderfläche ausbildet.
Die Förderrichtung entspricht folglich jener Richtung, in welche Objekte bzw. Subjekte im Förderabschnitt des angetriebenen Förderorgans gefördert werden.
Die Förderfläche ist insbesondere eine ebene Fläche. Die Förderfläche ist insbesondere horizontal ausgerichtet.

Das Förderorgan kann in einem oder beiden Kopfendbereichen über eine Antriebsvorrichtung angetrieben sein.
Die Abstreiflippe verschliesst insbesondere den Spalt zwischen der Übernahmeleiste und dem Förderorgan im Bereich der Umlenkung.

Die Abstreiflippe kann ein wulstförmiger oder kammartiger Endabschnitt der Abstreifleiste sein. Die Abstreiflippe kann auch ein flacher Endabschnittstreifen der Abstreifleiste sein. Die Abstreiflippe kann einen zum Halteabschnitt veränderten Querschnitt aufzuweisen. Die Abstreiflippe braucht jedoch nicht zwingend einen zum Halteabschnitt veränderten Querschnitt aufzuweisen.

Die flexible Abstreiflippe liegt dem Förderorgan insbesondere an. Dies kann z. B. durch das Eigengewicht der Abstreifleiste geschehen. Die Abstreiflippe folgt aufgrund des Eigengewichts insbesondere der Kontur des sich vorbei bewegenden Förderorgans.

Die flexible Abstreiflippe wird insbesondere über eine Vorspannung an das Förderorgan gedrückt. Die Vorspannung ist insbesondere eine elastische Vorspannung. Die Abstreiflippe folgt aufgrund der Vorspannung insbesondere der Kontur des sich vorbei bewegenden Förderorgans.

Die flexible Abstreiflippe ist insbesondere schräg nach oben abgewinkelt, z. B. schräg nach oben gebogen. Die Abwinkelung der Abstreiflippe wirkt sich stabilisierend auf dessen Lage aus. So ist beispielsweise die Gefahr klein, dass die Abstreiflippe durch die Bewegung des Förderorgans nach unten in die Umlenkung gezogen wird.

Die Stirnkante der Abstreiflippe ist insbesondere auf dem Niveau der Förderfläche oder darunter angeordnet.

Die Abstreiflippe ist insbesondere in die Umlenkung des Förderorgans gerichtet. Die Abstreiflippe ist insbesondere unterhalb des Niveaus der Förderfläche in einem oberen Bereich der Umlenkung des Förderorgans angeordnet.

Die Abstreiflippe besteht insbesondere aus einem Kunststoff. Der Kunststoff kann ein elastischer Kunststoff sein. Der Kunststoff kann reibungsarme Eigenschaften aufweisen.

Gemäss einer Weiterbildung der Erfindung besteht die gesamte Abstreifleiste aus einem oben genannten Kunststoff. Die Abstreifleiste ist insbesondere als Ganzes flexibel ausgebildet.

Gemäss einer Weiterbildung der Erfindung bildet die Abstreifeinheit eine Aufnahmenut für den Halteabschnitt der Abstreifleiste aus. Die Aufnahmenut ist insbesondere schlitzförmig ausgebildet. Die Aufnahmenut verläuft insbesondere quer zur Förderrichtung. Die Aufnahmenut ist insbesondere zum Förderorgan hin offen.

Die Abstreifleiste ist über den Halteabschnitt in der Aufnahmenut gelagert. Die Abstreifleiste ist insbesondere entlang einer Achse quer zur Förderfläche schwimmend in der Aufnahmenut gelagert. Quer zur Förderfläche bedeutet bei einer horizontalen Förderfläche insbesondere in vertikaler Ausrichtung.

Die Abstreifleiste ist mit ihrem Halteabschnitt insbesondere mit Spiel entlang einer Achse quer zur Förderfläche in der Aufnahmenut gelagert. So kann die Höhe der Aufnahmenut 1 mm bis mehrere Millimeter grösser sein als die Höhe des Halteabschnittes.

Die schwimmende Lagerung der Abstreifleiste hat den Vorteil, dass diese den durch das Fördeorgan eingebrachten Schwingungen zu einem gewissen Masse ausweichen bzw. dies kompensieren kann. Dadurch wird der Verschleiss der Abstreifleiste vermindert. Ferner lässt sich eine als Verschleissteil ausgelegte Abstreifleiste einfach und schnell auswechseln. Dies kann mitunter werkzeugfrei erfolgen.

Die Abstreifleiste kann z. B. mit dem Halteabschnitt in die Aufnahmenut eingeschoben bzw. eingelegt sein. Die Abstreifleiste kann über insbesondere nachfolgend beschriebene Sicherungsmittel gegen ein Herausgleiten aus der Aufnahmenut gesichert sein.

Der Halteabschnitt ist insbesondere auf einem Niveau unterhalb der Förderfläche angeordnet, insbesondere in der Aufnahmenut angeordnet. Gemäss einer besonderen Ausführungsform ist die gesamte Abstreifleiste auf einem Niveau unterhalb der Förderfläche angeordnet.

Gemäss einer Weiterbildung der Erfindung ist der Halteabschnitt der Abstreifleiste in der Aufnahmenut durch Sicherungsmittel gegen ein Herausgleiten aus der Aufnahmenut gesichert. Dies betrifft insbesondere sowohl ein seitliches Herausgleiten aus der Aufnahmenut als auch ein Herausgleiten zum Förderorgan hin aus der Aufnahmenut.

Es können beispielsweise seitliche Begrenzungsstrukturen, insbesondere seitliche Begrenzungselemente, vorgesehen sein, welche die seitliche Bewegung des Halteabschnitts und gegebenenfalls auch die Bewegung des Halteabschnittes zum Förderorgan hin begrenzen.

Gemäss einer besonderen Ausführungsvariante kann der Halteabschnitt, in Draufsicht, T-förmig ausgebildet sein und in eine T-förmige Nut eingesetzt sein. Die T-förmige Ausgestaltung verhindert sowohl ein seitliches Herausgleiten aus der Aufnahmenut als auch ein Herausgleiten nach vorne zum Förderorgan hin.

Ferner können auch Sicherungselemente vorgesehen sein, welche quer durch die Aufnahmenut sowie durch Ausnehmungen im Halteabschnitt geführt sind und so den Halteabschnitt gegen ein seitliches Herausgleiten und gegen ein Herausgleiten zum Förderorgan hin sichern. Die Sicherungselemente können Sicherungsstifte bzw. Sicherungsbolzen sein.
Die Sicherungsmittel zur Sicherung gegen ein seitliches Herausgleiten bzw. gegen ein Herausgleiten zum Förderorgan hin gewähren dem Halteabschnitt insbesondere etwas seitliches Spiel bzw. Spiel zum Förderorgan hin, so dass keine Klemmung des Halteabschnittes auftritt und die schwimmende Lagerung beeinträchtigt wird.
Die Abstreifleiste braucht jedoch nicht zwingend über separate Sicherungsmittel gegen ein Herausgleiten aus der Aufnahmenut gesichert sein. So kann die Abstreifleiste beispielsweise auch durch die dem Förderorgan anliegende, flexible Abstreiflippe gegen ein Herausgleiten aus der Aufnahmenut entgegen der Förderrichtung gesichert sein.
Die Übernahmeleiste bildet eine Übernahmefläche aus, auf welche die Fremdkörper von der Förderfläche des Förderorgans über die Abstreiflippe im Rahmen des nachfolgend noch beschriebenen Abstreifvorgangs gefördert werden. Die Übernahmeleiste bildet ferner auch einen Trittschutz im Kopfendbereich aus.
Die Übernahmeleiste ist insbesondere starr ausgebildet.

Die Übernahmeleiste ist in der Verlängerung der Förderfläche angeordnet.
Die Übernahmefläche ist insbesondere eben ausgebildet. Die Übernahmefläche weist beispielsweise eine horizontale Ausrichtung auf. Die Übernahmefläche kann auch in Förderrichtung, gegebenenfalls zu einem Auffangbehälter hin, schräg abfallend geneigt sein. Die Neigung kann beispielsweise grösser 0° (Winkelgrade) und kleiner 20°, insbesondere kleiner 15° sein. Die Neigung soll eine Förderung der Fremdkörper auf der Übernahmefläche in Förderrichtung des Förderorgans mittels Schwerkraft unterstützen.
Gemäss einer Weiterbildung der Erfindung ist die Übernahmeleiste derart mit der der Tragstruktur des Werker-Mitfahrbandes verbunden, dass durch die Bewegung des Förderorgans oder eine Antriebsmotors ausgelöste Schwingungen, insbesondere Vibrationen, auf die Übernahmeleiste übertragen werden. Die Übernahmeleiste wird dadurch in Schwingung insbesondere in Vibration versetzt. Die Schwingungen bzw. Vibrationen beinhaltet eine Bewegung in vertikaler Richtung.

Die Verbindung ist insbesondere dergestalt, dass sich die Schwingungen bzw. Vibrationen in der Übernahmeleiste noch verstärken. Die Übernahmeleiste ist also als insbesondere Vibrationsförderelement ausgebildet.
Die Übernahmeleiste steht in diesem Zusammenhang insbesondere derart mit der Abstreifleiste in Wirkverbindung, dass durch die Bewegung des Förderorgans ausgelöste Schwingungen, insbesondere Vibrationen, vom Förderorgan über die Abstreifleiste auf die Übernahmeleiste übertragen werden.
Die Übernahmeleiste ist hierzu relativ zur Tragstruktur der Fördereinrichtung schwingfähig befestigt bzw. gelagert. Die Übernahmeleiste ist elastisch gelagert. So kann die Übernahmeleiste direkt oder indirekt über elastische Verbindungsmittel, wie Gummipuffer, mit der Fördereinrichtung bzw. deren Tragstruktur verbunden sein. Die elastischen Verbindungsmittel stellen eine bewegliche Lagerung her.

Gemäss einer alternativen Lösung, welche nicht Teil der Erfindung ist, ist die Übernahmeleiste über eine lockere Verbindung mit Spiel mit der Förderreinrichtung bzw. deren Tragstruktur verbunden.

Die Aufnahmenut ist insbesondere unterhalb der Übernahmefläche der Übernahmeleiste angeordnet. Die Aufnahmenut ist insbesondere unterhalb der Übernahmeleiste angeordnet. Entsprechend ist die Abstreifleiste mit ihrem Halteabschnitt unterhalb der Übernahmefläche bzw. der Übernahmeleiste in der Aufnahmenut gehaltert.

Gemäss einer Weiterbildung der Erfindung wird die Aufnahmenut nach oben durch die Übernahmeleiste und nach unten durch eine Querleiste der Fördereinrichtung begrenzt. Die Übernahmeleiste und die Querleiste sind dabei unter Ausbildung der Aufnahmenut durch eine zwischen der Übernahmeleiste und der Querleiste angeordnete Abstandleiste voneinander beabstandet. Die Ausdehnung der Abstandleiste zum Förderorgan hin ist entsprechend kleiner als die korrespondierende Ausdehnung der Übernahmeleiste und der Querleiste.

Das Werker-Mitfahrband kann am Kopfende des vorderen Kopfendbereichs eine stirnseitige Abdeckblende enthalten. Diese schliesst die Fördereinrichtung am Kopfende ab.
Die Abdeckblende und Querleiste können miteinander in einem Winkel, wie 90°, verbunden. Die Querleiste kann zusammen mit der Abdeckblende einteilig ausgebildet sein.
Die Abdeckblende und Querleiste können aus Kunststoff oder Metall sein. Die Abdeckblende und Querleiste können z. B. als Winkelblech ausgebildet sein.
Die Abdeckblende kann lösbar mit der Tragstruktur der Fördereinrichtung, insbesondere mit seitlichen Rahmenprofilen, verbindbar sein. So kann die Abdeckblende Einhängeelemente enthalten, über welche diese an Einhängeöffnungen der Tragstruktur, insbesondere an seitlichen Rahmenprofilen, eingehängt werden kann. Die Abdeckblende, gegebenenfalls zusammen mit der Querleiste, kann auch Teil der Tragstruktur sein und z. B. eine Querverstrebung ausbilden.

Sind die Abdeckblende und Querleiste miteinander verbunden, so lässt sich beispielsweise über die lösbare Verbindung der Abdeckblende mit der Tragstruktur die gesamte Abstreifvorrichtung, gegebenenfalls zusammen mit einem Auffangbehälter, als Montagegruppe in einem Schritt an der Fördereinrichtung montieren und demontieren.

Die Übernahmeleiste und die Halteleiste können aus Metall oder Kunststoff sein. Die Übernahmeleiste und die Halteleiste liegen insbesondere als Blech- oder Plattenelemente vor.

Gemäss einer Weiterbildung der Erfindung enthält die Abstreifvorrichtung einen Auffangbehälter. Der Auffangbehälter bildet einen Aufnahmeraum für Fremdkörper aus. Der Auffangbehälter ist am Kopfende des vorderen Kopfendbereichs angeordnet. Der Auffangbehälter erstreckt sich insbesondere mindestens über die Breite des Förderorgans.

Der Auffangbehälter ist insbesondere lösbar mit der Fördereinrichtung verbunden. Die lösbare Verbindung soll insbesondere werkzeugfrei herstellbar und wieder lösbar sein.

Der Auffangbehälter ist insbesondere an einer Abdeckblende am Kopfende des vorderen Kopfendbereichs anbringbar.

Der Auffangbehälter kann beispielsweise über entsprechende Verbindungselemente an der Fördereinrichtung, insbesondere an der Abdeckblende, ein- und wieder aushängbar sein.

So kann der Auffangbehälter Einhängelemente enthalten, mittels welchen der Auffangbehälter in Einhängeöffnungen an der Fördereinrichtung, insbesondere an der Abdeckblende, ein- und wieder aushängbar ist.
Der Auffangbehälter weist eine Auffangöffnung auf. Die Auffangöffnung ist insbesondere mit einem Abdeckelement abgedeckt. Das Abdeckelement weist mindestens eine Durchlassöffnung für den Durchlass von Fremdkörpern in den Aufnahmeraum des Auffangbehälters auf. Das Abdeckelement dient z. B. als Trittschutz. Das Abdeckelement kann ein Abdeckrost bzw. Abdeckgitter sein.

Das Abdeckelement ist insbesondere im Anschluss an die Übernahmeleiste angeordnet. Das Abdeckelement ist insbesondere in der Verlängerung der Förderfläche angeordnet.
Der Auffangbehälter schliesst mit der Auffangöffnung an die Übernahmeleiste an.
Die Übernahmeleiste bildet insbesondere eine Transportfläche für den Transport von Fremdkörpern weg vom Förderorgan insbesondere in den Auffangbehälter aus. Fallen nun Kleinteile als Fremdkörper auf die Förderfläche des Förderorgans, so werden diese auf dem Förderorgan zum vorderen Kopfendbereich der Fördereinrichtung hin gefördert. Im Bereich der Umlenkung im Kopfendbereich werden die Fremdkörper jedoch von der am Förderorgan anliegenden Abstreiflippe davon abgehalten, zusammen mit dem Förderorgan in die Umlenkung zu gehen. Die Fremdkörper werden vielmehr durch die Abstreiflippe vom Förderorgan abgestreift. Die Fremdkörper werden über die Abstreiflippe auf die Übernahmefläche der Übernahmeleiste befördert.
Durch die Schwingung bzw. Vibration der Übernahmeleiste bewegen sich die Fremdkörper auf der Übernahmeleiste zum Kopfende hin. Am Kopfende fallen die Fremdkörper entweder von der Fördereinrichtung auf den Boden oder, falls vorhanden, in einen am Kopfende angebrachten Auffangbehälter.
Der Auffangbehälter braucht nun lediglich von Zeit zu Zeit geleert zu werden. Eine Reinigung der Umgebung vor heruntergefallenen Fremdkörpern ist nicht notwendig. Das flächig ausgedehnte Förderorgan bildet eine Auflagefläche für das Fördergut, für Tiere und insbesondere für Personen aus. Diese Auflagefläche wird Förderfläche genannt.

Das flächig ausgedehnte Förderorgan ist insbesondere endlos ausgebildet.

Das Förderorgan kann einteilig ausgebildet sein und beispielsweise ein Förderband sein.

Das Förderorgan ist jedoch insbesondere mehrteilig ausgebildet. Das Förderorgan weist dennoch insbesondere eine durchgängige Förderfläche auf. Eine durchgängige Förderfläche bedeutet, dass der ebene Charakter der Förderfläche auch über den Verbindungsbereich zwischen den einzelnen Gliedern des Förderorgans erhalten bleibt.

So ist das Förderorgan insbesondere eine gegliederte Förderkette aus jeweils einzelnen, miteinander gelenkig verbundenen Kettengliedern. Eine solche Förderkette kann z. B. eine flächig ausgedehnte Gliederkette, ein Modulband, eine Plattenkette, eine Modulbandkette oder eine Mattenkette sein. Die Förderkette kann auch eine Scharnierbandkette oder eine Plattenbandkette sein. Die Kettenglieder der Förderkette können z. B. aus Kunststoff bestehen. Eine solche Förderkette in Ausführung einer Mattenkette ist beispielsweise in der Veröffentlichungsschrift EP 1 743 855 B1 beschrieben.

Die Verwendung einer Förderkette der oben beschriebenen Art hat den Vorteil, dass ihre Förderfläche aufgrund der vergleichsweise massiven Ausbildung der Kettenglieder weit stärker belastbar ist als die Förderfläche eines Förderbandes.

Förderketten weisen ferner die Eigenheit auf, dass diese in der Umlenkung in Querschnittsansicht eine polygonale Aussenkontur ausbilden. Durch diese polygonale Aussenkontur wird die der Aussenkontur des Förderorgans anliegende bzw. an dieser abgestützte Abstreiflippe durch die Förderbewegung der Förderkette in eine schwingende Bewegung versetzt. Die schwingende Bewegung entspricht insbesondere einer Abfolge von wechselseitigen Lageänderungen. Die schwingende Bewegung der Abstreifleiste wird auf die angrenzende Übernahmeleiste übertragen, welche entsprechend in Schwingung bzw. Vibration versetzt wird.
Durch Gleitreibung zwischen der Abstreiflippe und dem Förderorgan kann eine unterstützende, hochfrequente Schwingung erzeugt werden, welche in die Abstreifleiste eingeleitet wird.

Das Werker-Mitfahrband enthält insbesondere einen Tragrahmen mit seitlichen Längsprofilen sowie Querprofilen, welche die Längsprofile miteinander verbinden.

Werker-Mitfahrbänder werden, wie bereits erwähnt, in der industriellen Fertigung eingesetzt, in welcher Arbeitsschritte, wie Montagearbeiten, an geförderten Objekten einer Fertigungsstrasse vorgenommen werden müssen.
Um dem einzelnen Mitarbeiter genügend Zeit zur Durchführung seiner Arbeitsschrittezu geben, wird der Mitarbeiter auf einem Werker-Mitfahrband parallel zum Objekt in Förderrichtung mitbewegt. Der Mitarbeiter kann z. B. geschwindigkeitssynchron mit dem Objekt mitbewegt werden. Ein solches Werker-Mitfahrband kann eine Länge von einigen Metern, z. B. von 6 bis 60 m aufweisen.

Die Erfindung betrifft im Weiteren auch ein Verfahren nach Anspruch 12 zum Abscheiden von Fremdkörpern von einer Förderfläche eines Werker-Mitfahrbandes gemäss einem der Ansprüche 1-11. Das Verfahren zeichnet sich durch folgende Schritte aus:
- Abstreifen von Fremdkörpern von der Förderfläche des in Förderrichtung zur Abstreifleiste hin und an der Abstreifleiste vorbei nach unten bewegten Förderorgans durch die Abstreifleiste;
- Weiterfördern der Fremdkörper von der Abstreifleiste auf die Übernahmefläche der Übernahmeleiste mittels einer schwingenden Bewegung der Abstreifleiste;
- Weiterfördern der Fremdkörper in Förderrichtung auf der Übernahmefläche durch eine schwingende Bewegung der Übernahmeleiste.
Gemäss einer Weiterbildung des Verfahrens enthält die Abstreifvorrichtung einen Auffangbehälter mit einer Auffangöffnung, welche in Förderrichtung an die Übernahmefläche anschliesst, wobei die Fremdkörper auf der Übernahmefläche durch die schwingende Bewegung der Übernahmeleiste in Förderrichtung von der Übernahmefläche in den Auffangbehälter gefördert werden.
Gemäss einer Weiterbildung des Verfahrens ist der Auffangbehälter, wie bereits weiter oben beschrieben, lösbar an der Fördervorrichtung angebracht. Der Auffangbehälter wird zum Leeren von der Fördervorrichtung abgenommen, insbesondere ausgehängt, und nach dem Leeren wieder an die Fördervorrichtung angebracht, insbesondere an der Fördervorrichtung eingehängt.

Das erfindungsgemässe Werker-Mitfahrband weist den Vorteil auf, dass Fremdkörper auf dem Förderorgan durch die Abstreifvorrichtung vom Förderorgan abgeschieden werden. Die Fremdkörper gelangen im Bereich der Umlenkung nicht mehr in das Innere der Fördereinrichtung, wodurch eine Beschädigung der Fördereinrichtung verhindert und Betriebsstörungen vermieden werden.
Die Abstreifvorrichtung ist eine Selbstreinigungsvorrichtung, welche ohne gesonderten Antrieb und ohne Fremdhilfe betrieben werden kann und die Förderfläche automatisch von Fremdkörper säubert und die unmittelbare Arbeitsumgebung von Fremdkörpern freihält.

Das Auffangen der Fremdkörper in einem Auffangbehälter erlaubt die Rückführung der Fremdkörper, welches in der Regel Montageteile sind, in den Verarbeitungskreislauf. Ferner wird durch den Einsatz eines Auffangbehälters auch die Verschmutzung der Umgebung der Fördereinrichtung mit Fremdkörpern vermieden.
Im Folgenden wird der Erfindungsgegenstand anhand eines Ausführungsbeispiels, welches in den beiliegenden Zeichnungen dargestellt ist, näher erläutert. Es zeigen jeweils schematisch:
- Figur 1:: eine perspektivische Darstellung einer Abstreifvorrichtung;
- Figur 2:: eine perspektivische Darstellung des Auffangbehälters der Abstreifvorrichtung nach Figur 1;
- Figur 3:: eine perspektivische Darstellung der Abdeckblende mit Querleiste der Fördereinrichtung;
- Figur 4:: eine Seitenansicht der Abstreifvorrichtung nach Figur 1;
- Figur 5:: eine Draufsicht der Übernahmeleiste mit einer alternativen Befestigung der Abstreifleiste;
- Figur 6:: eine Seitenansicht der Abstreifvorrichtung mit einer weiteren alternativen Befestigung der Abstreifleiste;
- Figur 7a-7c:: eine Seitenansicht des erfindungsgemässen Werker-Mitfahrbandes vom Kopfendbereich;
- Figur 8:: eine Draufsicht einer Fertigungsstrasse mit Werker-Mitfahrbändern;
- Figur 9:: eine Seitenansicht eines Werkermitfahrbandes nach Figur 8 aus dem Kopfendbereich.
Grundsätzlich sind in den Figuren gleiche Teile mit gleichen Bezugszeichen versehen.

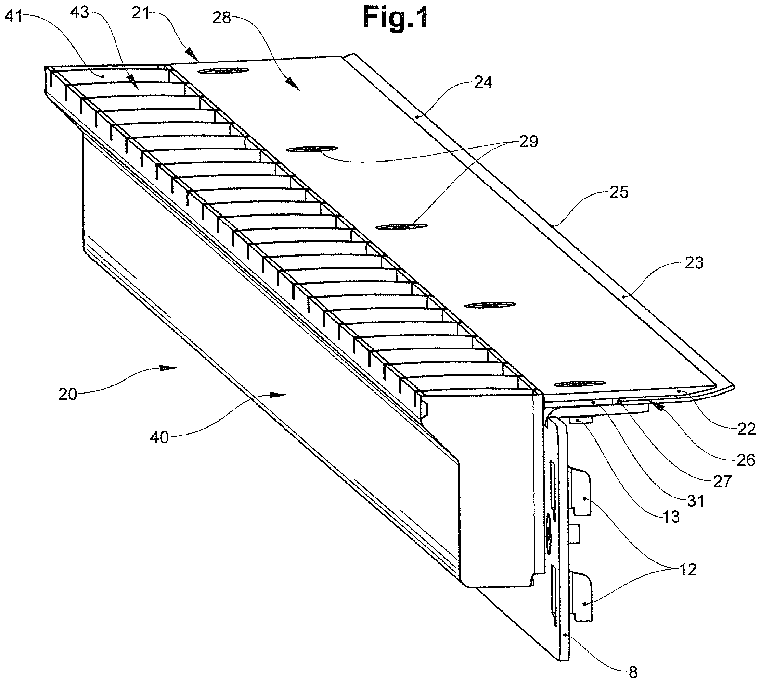

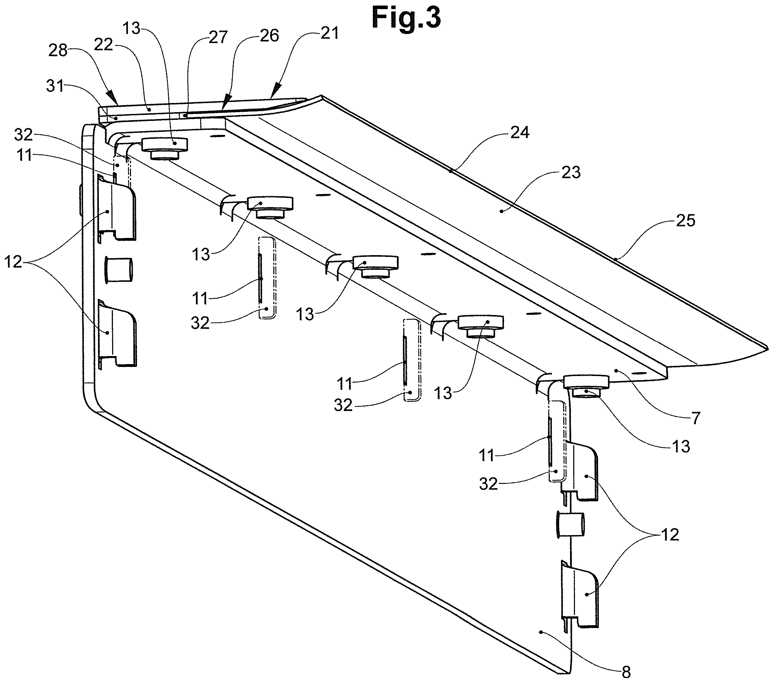

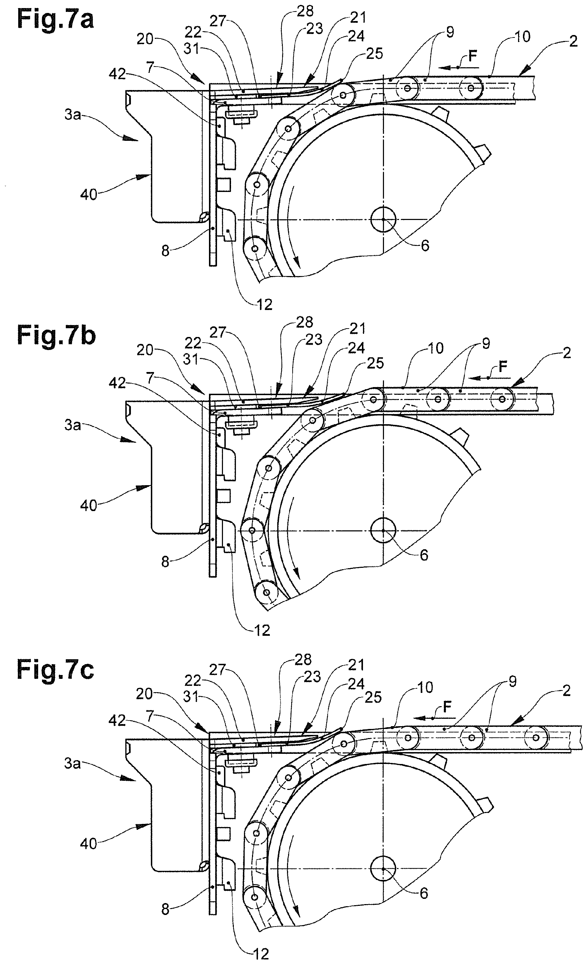

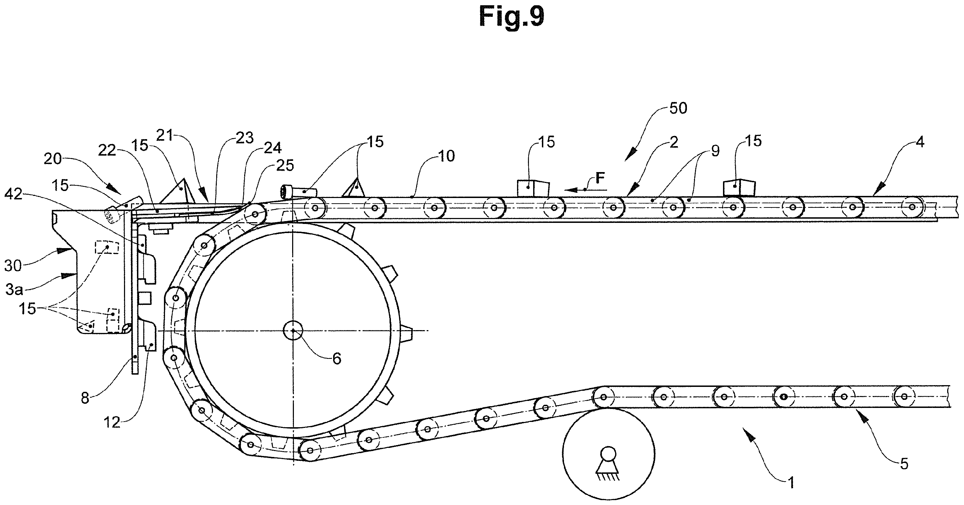

Die Figur 1 zeigt eine Ausführungsform einer Abstreifvorrichtung 20. Die Abstreifvorrichtung 20 enthält eine Abstreifeinheit 21 mit einer Übernahmeleiste 22, welche eine ebene Übernahmefläche 28 ausbildet. Die Übernahmeleiste 22 ist mittels Verbindungsschrauben 29 mit einer Querleiste 7 einer Fördereinrichtung 1 verbunden (siehe auch Figur 3, 4, 6, 7a-7c und 9).
Zwischen der Übernahmeleiste 22 und der Querleiste 7 ist eine Abstandleiste 31 angeordnet, welche jedoch zum Förderorgan 2 hin gegenüber der Übernahmeleiste 22 und der Querleiste 7 verkürzt ausgebildet ist, so dass die Übernahmeleiste 22 und die Querleiste 7 eine zum Förderorgan 2 hin offene Aufnahmenut 27 ausbilden, welche zum Kopfende hin durch die Abstandleiste 31 abgeschlossen ist (siehe Figur 7a-7c und 9).
Eine Abstreifleiste 23 aus Kunststoff ist mit einem Halteabschnitt 26 in die Aufnahmenut 27 eingeschoben und entlang einer Achse quer zur Förderfläche, d.h. vertikal schwimmend gelagert. Der Halteabschnitt 26 weist in der Aufnahmenut 27 entlang der Achse quer zur Förderfläche 10 entsprechend Spiel auf. Die Abstreifleiste 23 ist mit ihrem Halteabschnitt 26 entsprechend unter der Übernahmeleiste 22 angeordnet.

Die Abstreifleiste 23 bildet eine der Übernahmeleiste 22 in Richtung des Förderorgans 2 vorstehende Abstreiflippe 24 aus. Die Abstreiflippe 24 ist nach oben abgebogen. Wie aus der Figur 7a bis 7c sowie der Figur 9 hervorgeht, liegt die Abstreiflippe 24 dem Förderorgan 2 auf. Die Abstreiflippe 24 weist hierzu insbesondere eine Vorspannung auf. Die am Förderorgan 2 abgestützte Stirnkante 25 der Abstreiflippe 24 folgt der Aussenkontur des an der Abstreiflippe 24 vorbei bewegten Förderorgans 2. Entsprechend weist die Stirnkante 25 eine zeitlich veränderliche Stützlage auf.

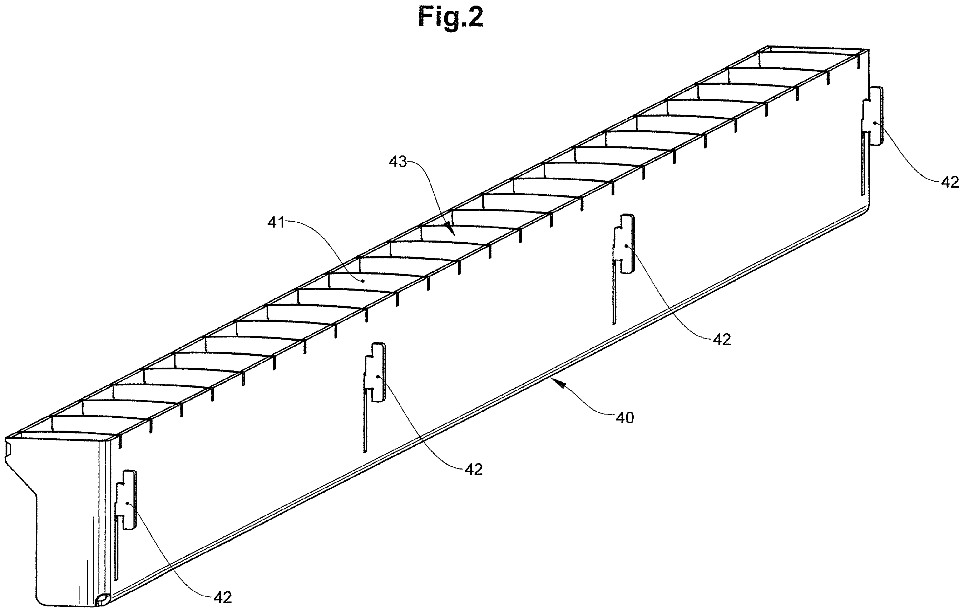

Die Übernahmeleiste 22 weist an ihrem zum Förderorgan 2 gerichteten Endabschnitt zur Abstreifleiste 23 hin eine Abschrägung auf, welche die Abwinklung der Abstreiflippe 24 unterstützt.
Die Abstreifvorrichtung 20 enthält im Weiteren einen Auffangbehälter 40, welcher über Einhängeelemente 42 (siehe auch Figur 2) in Einhängeöffnungen 11 einer Abdeckblende 8 des Werker-Mitfahrbandes 1 eingehängt ist. Auf diese Weise lässt sich der Auffangbehälter 40 zum Leeren schnell und einfach aushängen und wieder einhängen. Der Auffangbehälter 40 weist eine Auffangöffnung 43 auf, welche mit einem Abdeckrost 41 abgedeckt ist. Der Abdeckrost 41 soll verhindern, dass grössere Objekte, welche nicht in den Auffangbehälter 40 gehören, aus Versehen in diesen geraten. Ausserdem dient der Abdeckrost 41 auch als Trittschutz.
Die Abdeckblende 8 selbst weist ebenfalls Einhängeelement 12 auf, über welche die Abdeckblende 8 in Einhängeöffnungen am seitlichen Rahmen des Werker-Mitfahrbandes 1 lösbar eingehängt werden kann. Die Abdeckblende 8 ist auf diese Weise ebenfalls einfach montier- und demontierbar, wodurch ein schneller Zugriff auf das Umlenkorgan im Kopfendbereich gewährleistet wird.
Die Querleiste 7 und die Abdeckblende 8 sind in der Form eines Winkelbleches einteilig ausgebildet (siehe auch Figur 3). So kann über die Einhängverbindung der Abdeckblende mit dem seitlichen Rahmen die gesamte Abstreifvorrichtung 20 als Baugruppe in einem Schritt montiert und demontiert werden.
An der Querleiste 7 sind Gummipuffer 13 angebracht, welche eine elastisch dämpfende Befestigung der Übernahmeleiste 22 über die Querleiste 7 an der Fördereinrichtung 1 erlaubt. Dadurch ist die Übernahmeleiste 22 relativ zum Werker-Mitfahrband 1 bzw. zu deren Tragstruktur schwingfähig gelagert.

Damit die schwimmend in der Aufnahmenut 27 gelagerte Abstreifleiste 23 durch die Schwingungen nicht seitlich oder zum Förderorgan 2 hin aus der Aufnahmenut 27 "wandert", sind Sicherungsmittel vorgesehen. Diese sichern den Halteabschnitt 26 gegen ein Herausgleiten aus der Aufnahmenut 27.

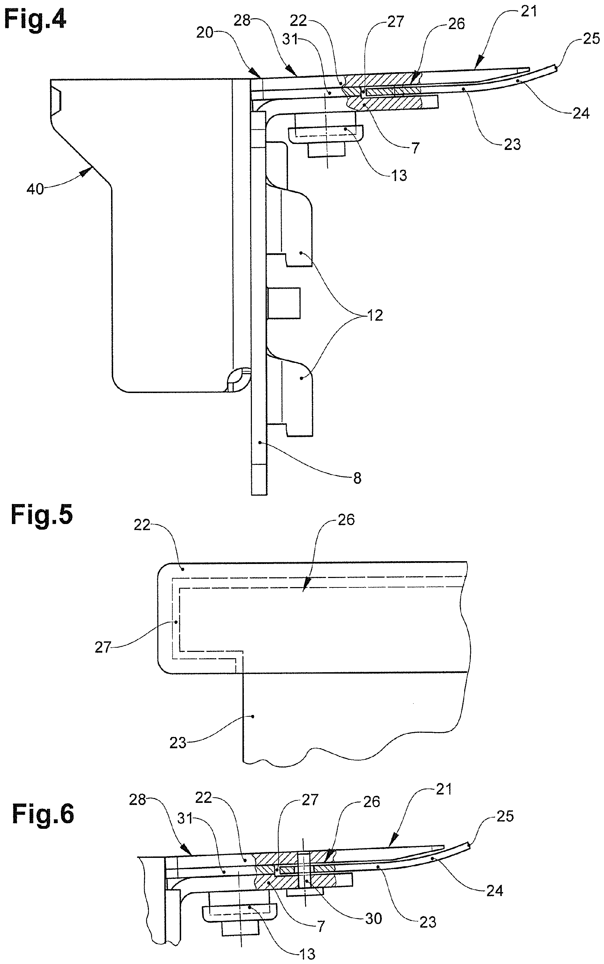

Die Sicherungsmittel umfassen gemäss Figur 6 Stiftelemente 30, welche quer durch die Aufnahmenut 27 und durch Ausnehmungen im Halteabschnitt 26 geführt sind. Die Stiftelemente 30 sind in der Übernahmeleiste 22 und/oder der Querleiste 7 gegen ein Herausfallen fixiert.

Die Figur 5 zeigt eine weitere alternative oder zusätzliche Variante zur Sicherung der Abstreifleiste 23 vor einem Herausgleiten aus der Aufnahmenut 27. Der Halteabschnitt 26 ist hier, in Draufsicht, T-förmig ausgebildet und greift in die korrespondierend ausgebildete Aufnahmenut 27 ein. Durch den T-förmigen Eingriff in die Aufnahmenut 27 ist ein seitliches Herausgleiten sowie ein Herausgleiten aus der Nutöffnung in Richtung Förderorgan 2 nicht möglich.

Das Förderorgan 2 gemäss den Figuren 7a bis 7c sowie Figur 8 und 9 ist als Modulbandkette ausgebildet und besteht aus einer Vielzahl von Kettengliedern, welche über Verbindungsachsen relativ zueinander verschwenkbar miteinander verbunden sind. Die Modulbandkette 2 bildet in der Umlenkung eine polygonale Aussenkontur aus.

Das Verfahren zum Abstreifen von Fremdkörpern 15 von der Förderfläche 10 des Förderorgans 2 lässt sich anhand der Figuren 7a bis 7c erläutern.

Die Modulbandkette 2 wird durch eine Antriebsvorrichtung (nicht gezeigt) in Förderrichtung F angetrieben. Im vorderen Kopfendbereich wird die Modulbandkette 2 in eine Umlenkung um eine Umlenkachse 6 geführt. Die Modulbandkette 2 wechselt in der Umlenkung von einem Förderabschnitt 4 in einen Rückführabschnitt 5.
Die Abstreifleiste 23 liegt mit ihrer Abstreiflippe 24 unterhalb des Niveaus der Förderfläche 10 in einem oberen Bereich der Umlenkung der Modulbandkette 2 an. Die Abstreiflippe 24 folgt aufgrund der Vorspannung der Kontur der vorbei bewegten Modulbandkette.
Durch die polygonale Aussenkontur der bewegten Modulbandkette 2 in der Umlenkung wird die an die Modulbandkette 2 gedrückte Abstreiflippe 24 in eine schwingende Bewegung versetzt. Diese Bewegung wird von der Abstreifleiste 23 auf die gegenüber dem Werker-Mitfahrband 1 schwingfähig gelagerte Übernahmeleiste 22 übertragen, welche folglich in Schwingung gerät.
Die Fremdkörper 15, welche nun auf der Modulbandkette 2 zum vorderen Kopfendbereich 3a hin gefördert werden, laufen im Bereich der Umlenkung auf die Abstreiflippe 24 auf und werden an der Abstreiflippe 24 von der Modulbandkette 2 abgestreift. Die Fremdkörper 15 werden durch ihr Trägheitsmoment sowie durch die schwingende Abstreiflippe 24 über die Abstreiflippe 24 auf die Übernahmefläche 28 der Übernahmeleiste 22 überführt.
Durch die Schwingung bzw. Vibration der Übernahmeleiste 22 werden die Fremdkörper 15 auf der Übernahmefläche in Bewegung gehalten. Obwohl die Fremdkörper eine im Wesentlichen ungerichtete Bewegung auf der Übernahmefläche aufweisen, werden diese letztendlich zum Auffangbehälter 40 hingeführt, wo die Fremdkörper 15 durch den Abdeckrost 41 in den Auffangbehälter 40 fallen.
Da die Bewegung der Fremdkörper 15 auf der Übernahmeleiste 22, wie erwähnt, im Wesentlichen ungerichtet ist, fördert eine zum Auffangbehälter 40 hin geneigte Übernahmefläche 28 die Bewegung der Fremdkörper 15 zum Auffangbehälter 40 hin durch Schwerkraftunterstützung.

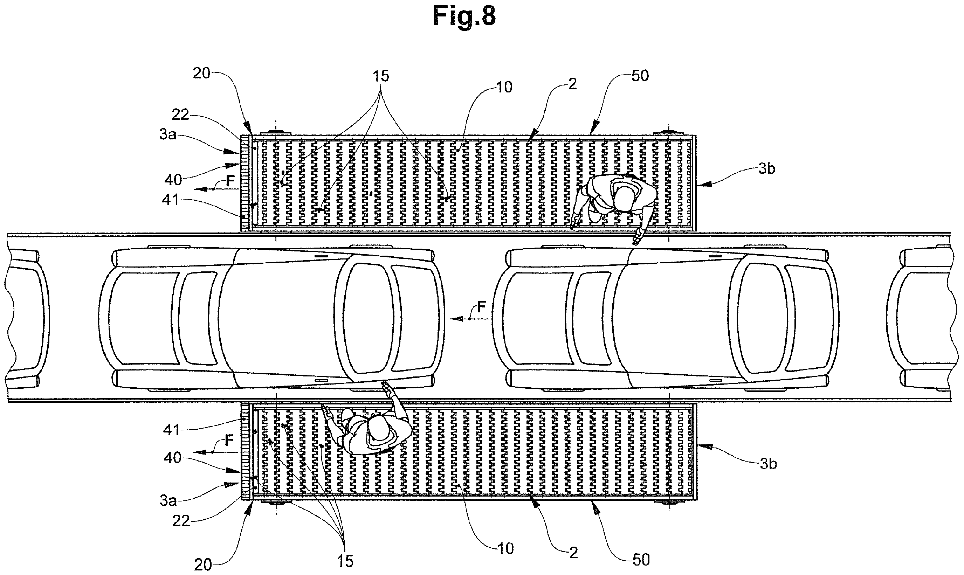

Die Figur 8 zeigt eine Fertigungsstrasse mit beidseitig von der Fertigungsstrasse angeordneten Werker-Mitfahrbändern 50. Die Werker-Mitfahrbänder 50 umfassen Modulbandketten 2, welche an einem vorderen und hinteren Kopfendbereich 3a, 3b jeweils umgelenkt wird.

Am vorderen Kopfendbereich 3a ist eine erfindungsgemässe Abstreifvorrichtung 20 der bereits beschriebenen Art angeordnet.

Die Figur 9 zeigt eine Seitenansicht des Werker-Mitfahrbandes 50 vom vorderen Kopfendbereich 3a.

## Patentansprüche

1. Werker-Mitfahrband (1) mit einem umlaufend geführten, flächig ausgedehnten Förderorgan (2), welches einen Förderabschnitt (4) mit einer Förderfläche (10) und einen unterhalb des Förderabschnittes (4) angeordneten Rückführabschnitt (5) ausbildet, und das Förderorgan (2) in zwei, entlang der Förderrichtung (F) voneinander beabstandeten Kopfendbereichen (3a, 3b) jeweils umgelenkt wird, wobei in einem in Förderrichtung (F) vorderen Kopfendbereich (3a), in welchem das Förderorgan (2) vom Förderabschnitt (4) in den Rückführabschnitt (5) umgelenkt wird, eine Abstreifvorrichtung (20) zum Abstreifen und Abscheiden von auf der Förderfläche (10) des Förderorgans (2) mitgeführten Fremdkörpern (15) angeordnet ist, und die Abstreifvorrichtung (20) eine Abstreifeinheit (21) mit einer quer zur Förderrichtung (F) verlaufenden, in der Verlängerung der Förderfläche angeordneten Übernahmeleiste (22) mit einer Übernahmefläche (28) sowie eine an der Abstreifeinheit (21) gelagerte Abstreifleiste (23) enthält, welche eine, zum Förderorgan (2) hin der Übernahmeleiste (22) vorstehende, flexible Abstreiflippe (24) ausbildet, wobei das Förderorgan (2) in Förderrichtung (F) zur Abstreifleiste (23) hin und an der Abstreifleiste (23) vorbei nach unten vom Förderabschnitt (4) in den Rückführabschnitt (5) umgelenkt wird,
**dadurch gekennzeichnet, dass**
die Übernahmeleiste (22) direkt oder indirekt über elastische Verbindungsmittel mit der Tragstruktur des Werker-Mitfahrbandes (1) verbunden und auf diese Weise relativ zur Tragstruktur schwingungsfähig und somit elastisch gelagert ist, so dass durch
die Bewegung des Förderorgans (2) oder eines Antriebsmotors ausgelösten Schwingungen auf die Übernahmeleiste (22) übertragen werden, wodurch Fremdkörper (15), welche durch eine schwingende Bewegung der Abstreifleiste (23) von der Förderfläche (10) abgestreift und auf die Übernahmefläche (28) der Übernahmeleiste (22) weitergefördert werden, durch die schwingende Bewegung der Übernahmeleiste (22) auf der Übernahmefläche (28) in Förderrichtung (F) weitergefördert werden.

2. Werker-Mitfahrband gemäss Anspruch 1, **dadurch gekennzeichnet, dass** die Abstreifeinheit (21) eine Aufnahmenut (27) ausbildet, in welcher die Abstreifleiste (23) über einen Halteabschnitt (26) mit Spiel entlang einer Achse quer zur Förderfläche (10) gelagert ist.

3. Werker-Mitfahrband gemäss einem der Ansprüche 2 bis 2, **dadurch gekennzeichnet, dass** die Abstreifleiste (23) in die Aufnahmenut (27) einschiebbar ist.

4. Werker-Mitfahrband gemäss einem der Ansprüche 1 bis 3, **dadurch gekennzeichnet, dass** die Übernahmefläche (28) in Förderrichtung (F) schräg abfallend geneigt ist.

5. Werker-Mitfahrband gemäss einem der Ansprüche 2 bis 4, **dadurch gekennzeichnet, dass** der Halteabschnitt (26) und insbesondere die Abstreifleiste (23) auf einem Niveau unterhalb der Förderfläche (10) angeordnet ist.

6. Werker-Mitfahrband gemäss einem der Ansprüche 1 bis 5, **dadurch gekennzeichnet, dass** die Abstreiflippe (24) aus Kunststoff besteht.

7. Werker-Mitfahrband gemäss einem der Ansprüche 1 bis 6, **dadurch gekennzeichnet, dass** die Abstreiflippe (24) nach oben abgewinkelt ist.

8. Werker-Mitfahrband gemäss einem der Ansprüche 2 bis 7, **dadurch gekennzeichnet, dass** die Abstreifleiste (23) in der Aufnahmenut (27) über Sicherungsmittel (30) gegen ein Herausgleiten aus der Aufnahmenut (27) gesichert ist.

9. Werker-Mitfahrband gemäss einem der Ansprüche 2 bis 8, **dadurch gekennzeichnet, dass** die Aufnahmenut (27) unter der Übernahmefläche (28) der Übernahmeleiste (22) und insbesondere unter der Übernahmeleiste (22) angeordnet ist.

10. Werker-Mitfahrband gemäss einem der Ansprüche 1 bis 9, **dadurch gekennzeichnet, dass** die Abstreifvorrichtung (20) einen Auffangbehälter (40) mit einer Auffangöffnung (43) enthält, welcher am Kopfende des Werker-Mitfahrbandes (1), insbesondere lösbar, angeordnet ist, wobei die Auffangöffnung (43) an die Übernahmeleiste (22) anschliesst.

11. Werker-Mitfahrband gemäss einem der Ansprüche 1 bis 10, **dadurch gekennzeichnet, dass** das Förderorgan (2) mehrteilig ausgebildet ist.

12. Verfahren zum Abscheiden von Fremdkörpern (15) von einer Förderfläche (10) eines Werker-Mitfahrbandes (1) gemäss einem der Ansprüche 1 bis 11, **gekennzeichnet durch** die folgenden Schritte:
- Abstreifen von Fremdkörpern (15) von der Förderfläche (10) des in Förderrichtung (F) zur Abstreifleiste (23) hin und an der Abstreifleiste (23) vorbei nach unten bewegten Förderorgans (2) durch die Abstreifleiste (23);
- Weiterfördern der Fremdkörper (15) von der Abstreifleiste (23) auf die Übernahmefläche (28) der Übernahmeleiste (22) mittels einer schwingenden Bewegung der Abstreifleiste (23);
- Weiterfördern der Fremdkörper (15) in Förderrichtung (F) auf der Übernahmefläche (28) durch eine schwingende Bewegung der Übernahmeleiste (22).

13. Verfahren nach Anspruch 12, **dadurch gekennzeichnet, dass** die Abstreifvorrichtung (20) einen Auffangbehälter (40) mit einer Auffangöffnung (43) enthält, welche in Förderrichtung (F) an die Übernahmefläche (28) anschliesst, und die Fremdkörper (15) auf der Übernahmefläche (28) durch die schwingende Bewegung der Übernahmeleiste (22) in Förderrichtung (F) von der Übernahmefläche (28) in den Auffangbehälter (40) gefördert werden.

14. Verfahren nach Anspruch 12 oder 13, **dadurch gekennzeichnet, dass** der Auffangbehälter (40) lösbar an der Fördervorrichtung (1) angebracht ist, und der Auffangbehälter zum Leeren von der Fördervorrichtung (1) abgenommen und nach dem Leeren wieder an die Fördervorrichtung (1) angebracht wird.

## Claims

1. A worker-rider belt (1) with a revolvingly led, extensively extended conveying element (2) which forms a conveying section (4) with a conveying surface (10), and a return section (5) arranged below the conveying section (4), and the conveying element (2) is deflected in each case in two head-end regions (3a, 3b) which are distanced to one another along the conveying direction (F), wherein a wiper device (20) for wiping and separating foreign objects (15) led along on the conveying surface (10) of the conveying element (2) is arranged in a head-end region (3a) which is at the front in the conveying direction (F) and in which the conveying element (2) is deflected from the conveying section (4) into the return section (5), and the wiper device (20) comprises a wiper unit (21) with a receiving blade (22) with a receiving surface (28) which is running transversely to the conveying direction (F) and which is arranged in the extension of the conveying surface, as well as a wiper blade (23) which is mounted on the wiper unit (21) and which forms a flexible wiper lip (24) projecting towards the conveying element (2) beyond the receiving blade (22), wherein the conveying element (2) is moved in the conveying direction (F) towards the wiper blade (23) and at the wiper blade (23) downwards past the wiper blade (23) from the conveying section (4) into the return section (5),
**characterised in that**
the receiving blade (22) is connected to the support structure of the worker-rider belt (1) in a direct manner or indirectly via elastic connection means and thus is oscillatory and elastically mounted with respect to the support structure in a manner such that oscillations which are caused by the movement of the conveying element (2) or of a drive motor are transmitted onto the receiving blade (22), in a manner such that foreign objects (15) which are wiped from the conveying surface (10) by way of an oscillatory movement of the wiper blade (23) and are further conveyed onto the receiving surface (28) of the receiving blade (22), are further conveyed on the receiving surface (28) in the conveying direction (F) by way of an oscillating movement of the the receiving blade (22).

2. A worker-rider belt according to claim 1, **characterised in that** the wiper unit (21) forms a receiving groove (27), in which the wiper blade (23) via a holding section (26) is mounted with play along an axis transverse to the conveying surface (10).

3. A worker-rider belt according to one of the claims 1 to 2, **characterised in that** the wiper blade (23) can be inserted into the receiving groove (27).

4. A worker-rider belt according to one of the clams 1 to 3, **characterised in that** the receiving surface (28) is inclined dropping in an oblique manner in the conveying direction (F).

5. A worker-rider belt according to one of the claims 2 to 4, **characterised in that** the holding section (26) and in particular the wiper blade (23) is arranged at a level below the conveying surface (10).

6. A worker-rider belt according to one of the claims 1 to 5, **characterised in that** the wiper lip (24) consists of plastic.

7. A worker-rider belt according to one of the claims 1 to 6, **characterised in that** the wiper lip (24) is bent upwards.

8. A worker-rider belt according to one of the claims 2 to 7, **characterised in that** the wiper blade (23) in the receiving groove (27) is secured against sliding out of the receiving groove (27) via securing means (30).

9. A worker-rider belt according to one of the claims 2 to 8, **characterised in that** the receiving groove (27) is arranged below the receiving surface (28) of the receiving blade (22) and in particular below the receiving blade (22).

10. A worker-rider belt according to one of the claims 1 to 9, **characterised in that** the wiper device (20) comprises a capture container (40) with a capture opening (43) wherein the capture container (40) is arranged, preferably in a releasable manner, at the head end of the worker-rider belt (1), wherein the capture opening (43) connects to the receiving blade (22).

11. A worker-rider belt according to one of the claims 1 to 10, **characterised in that** the conveying element (2) is designed in a multi-part manner.

12. A method for separating foreign objects (15) from a conveying surface (10) of a worker-rider belt (1) according to one of the claims 1 to 11, **characterised by** the following steps:
- wiping foreign objects (15) by way of the wiper blade (23) from the conveying surface (10) of the conveying element (2) which is moved in the conveying direction (F) towards the wiper blade (23) and at the wiper blade (23) downwards past the wiper blade (23);
- conveying the foreign objects (15) further from the wiper blade (23) onto the receiving surface (28) of the receiving blade (22) by way of an oscillating movement of the wiper blade (23);
- conveying the foreign objects (15) further in the conveying direction (F) on the receiving surface (28) by way of an oscillating movement of the receiving blade (22).

13. A method according to claim 12, **characterised in that** the wiper device (20) comprises a capture container (40) with a capture opening (43) which connects to the receiving surface (28) in the conveying direction (F), and the foreign objects (15) are conveyed on the receiving surface (28) in the conveying direction (F) from the receiving surface (28) into the capture container (40) by way of the oscillatory movement of the receiving blade (22).

14. A method according to claim 12 or 13, **characterised in that** the capture container (40) is releasably attached on the worker-rider belt (1), and the capture container is removed from the worker-rider belt (1) for emptying, and is attached onto the worker-rider belt (1) again after the emptying.

## Revendications

1. Bande transporteuse (1) pour travailleur, présentant un organe de transport (2) s'étendant à plat et guidé en boucle fermée avec une section de transport (4) dotée d'une surface de transport (10) et une section de renvoi (5) disposée en dessous de la section de transport (4),
l'organe de transport (2) étant renvoyé dans deux parties (3a, 3b) d'extrémité de tête situées à distance l'une de l'autre dans la direction de transport (F),
un ensemble de raclage (20) qui racle et retire des corps étrangers (15) emportés sur la surface de transport (10) de l'organe de transport (2) étant prévu dans une partie (3a) d'extrémité de tête disposée à l'avant dans la direction de transport (F) et dans laquelle l'organe de transport (2) est renvoyé de la section de transport (4) à la section de renvoi (5),
l'ensemble de raclage (20) contenant une unité de raclage (21) dotée d'une latte de transfert (22) présentant une surface de transfert (28), s'étendant transversalement par rapport à la direction de transport (F) et disposée dans le prolongement de la surface de transport, ainsi qu'une latte de raclage (23) montée sur l'unité de raclage (21) et formant une lèvre flexible de raclage (24) qui déborde de la latte de transfert (22) en direction de l'organe de transport (2),
l'organe de transport (2) étant dévié vers la latte de raclage (23) dans la direction de transport (F) et à la latte de raclage (23) vers le bas et de la section de transport (4) à la section de renvoi (5),
**caractérisée en ce que**
la latte de transfert (22) est reliée directement ou indirectement par des moyens de liaison élastiques à la structure portante de la bande transporteuse (1) pour travailleur et est ainsi montée élastiquement de manière à pouvoir osciller par rapport à la structure porteuse de telle sorte que des vibrations provoquées par le déplacement de l'organe de transport (2) ou d'un moteur d'entraînement soient transmises à la latte de transfert (22), grâce à quoi des corps étrangers (15) qui sont raclés sur la surface de transport (10) par un déplacement oscillant de la latte de raclage (23) et sont évacués sur la surface de transfert (28) de la latte de transfert (22) sont transportés plus loin dans la direction de transport (F) sur la surface de transfert (28) par le déplacement oscillant de la latte de transfert (22).

2. Bande transporteuse pour travailleur selon la revendication 1, **caractérisée en ce que** l'unité de raclage (21) forme une rainure de réception (27) dans laquelle la latte de raclage (23) est montée avec un jeu suivant un axe transversal par rapport à la surface de transport (10) par l'intermédiaire d'une section de maintien (26).

3. Bande transporteuse pour travailleur selon l'une des revendications 1 et 2, **caractérisée en ce que** la latte de raclage (23) peut s'insérer dans la rainure de réception (27).

4. Bande transporteuse pour travailleur selon l'une des revendications 1 à 3, **caractérisée en ce que** la surface de transfert (28) est inclinée obliquement en descente dans la direction de transport (F).

5. Bande transporteuse pour travailleur selon l'une des revendications 2 à 4, **caractérisée en ce que** la section de maintien (26) et en particulier la latte de raclage (23) sont disposées à un niveau situé en dessous de la surface de transport (10).

6. Bande transporteuse pour travailleur selon l'une des revendications 1 à 5, **caractérisée en ce que** la lèvre de raclage (24) est réalisée en matière synthétique.

7. Bande transporteuse pour travailleur selon l'une des revendications 1 à 6, **caractérisée en ce que** la lèvre de raclage (24) est coudée vers le haut.

8. Bande transporteuse pour travailleur selon l'une des revendications 2 à 7, **caractérisée en ce que** la latte de raclage (23) placée dans la rainure de réception (27) est empêchée de glisser hors de la rainure de réception (27) par des moyens de blocage (30) .

9. Bande transporteuse pour travailleur selon l'une des revendications 2 à 8, **caractérisée en ce que** la rainure de réception (27) est disposée en dessous de la surface de transfert (28) de la latte de transfert (22) et en particulier en dessous de la latte de transfert (22) .

10. Bande transporteuse pour travailleur selon l'une des revendications 1 à 9, **caractérisée en ce que** l'ensemble de raclage (20) contient un récipient de reprise (40) doté d'une ouverture de reprise (43) et disposé, en particulier de manière libérable, à l'extrémité de tête de la bande transporteuse (1) pour travailleur, l'ouverture de reprise (43) se raccordant à la latte de transfert (22).

11. Bande transporteuse pour travailleur selon l'une des revendications 1 à 10, **caractérisée en ce que** l'organe de transport (2) est réalisé en plusieurs pièces.

12. Procédé d'enlèvement de corps étrangers (15) hors d'une surface de transport (10) d'une bande transporteuse (1) pour travailleur selon l'une des revendications 1 à 11, le procédé étant **caractérisé par** les étapes suivantes :
par la latte de raclage (23), raclage hors de la surface de transport (10) de l'organe de transport (2) des corps étrangers (15) déplacés vers la latte de raclage (23) dans la direction de transport (F) et vers le bas devant la latte de raclage (23),
transporter des corps étrangers (15) de la latte de raclage (23) sur la surface de transfert (28) de la latte de transfert (22) au moyen d'un déplacement oscillant de la latte de raclage (23),
par un déplacement oscillant de la latte de transfert (22), transporter des corps étrangers (15) dans la direction de transport (F) sur la surface de transfert (28).

13. Procédé selon la revendication 12, **caractérisé en ce que** l'ensemble de raclage (20) contient un récipient de reprise (40) doté d'une ouverture de reprise (43) qui se raccorde à la surface de transfert (28) dans la direction de transport (F), les corps étrangers (15) présents sur la surface de transfert (28) étant transportés dans la direction de transport (F) par la surface de transfert (28) vers le récipient de reprise (40) par un déplacement oscillant de la latte de transfert (22).

14. Procédé selon les revendications 12 ou 13, **caractérisé en ce que** le récipient de reprise (40) est installé de manière libérable à l'ensemble de transport (1) et **en ce que** le récipient de reprise est enlevé de l'ensemble de transport (1) pour être vidé et replacé à l'ensemble de transport (1) après avoir été vidé.
